# EUROPEAN PATENT SPECIFICATION

(11) **EP 2 091 868 B1**
(45) Date of publication and mention of the grant of the patent: **16.05.2018**
(21) Application number: 07861128.2
(22) Date of filing: 18.12.2007
(51) Int. Cl.: C01D 1/30

(54) **METHOD OF PREPARING POTASSIUM HYDROXIDE DIHYDRATE**
VERFAHREN ZUR HERSTELLUNG VON KALIUMHYDROXIDDIHYDRAT
PROCÉDÉ DE PRÉPARATION DE DIHYDRATE D'HYDROXYDE DE POTASSIUM

(30) Priority: 20.12.2006 EP 06126713; 21.12.2006 US 876368 P
(43) Date of publication of application: 26.08.2009
(73) Proprietor: Akzo Nobel Chemicals International B.V., 6824 BM Arnhem (NL)
(72) Inventor: HAMMER-OLSEN, Roy, 471 62 Höviksnäs (SE); JANSSON, Inger, 416 67 Göteborg (SE); HULTÉN, Felix Karl Torsten, 426 56 Västra Frölunda (SE); FORSBERG, Kerstin Maria, 115 43 Stockholm (SE); RASMUSON, Åke Christoffer, 182 79 Stocksund (SE)
(74) Representative: Akzo Nobel Chemicals IP Group
(86) International application number: PCT/SE2007/051033
(87) International publication number: WO 2008/076072

(56) References cited:
- FR-A- 714 276
- GB-A- 366 404
- JP-A- 1 246 125
- JP-A- 2 111 623
- US-A- 1 562 805
- US-A- 2 178 694
- US-A- 2 325 339

## Description

The present invention relates to a method of preparing potassium hydroxide dihydrate having a sodium content of less than 0.05 wt% based on the weight of the potassium hydroxide crystals.

### Background of the invention

Processes for purifying potassium hydroxide have been known for a long period of time. US 1,562,805 discloses one process in which potassium hydroxide is separated from a mixture of potassium and sodium hydroxides whereby the mixture is concentrated until crystallization occurs in part at an elevated temperature and potassium hydroxide crystals are formed and eliminated from the mother liquor at an elevated temperature. However, the crystallization process disclosed in US 1,562,805 involves substantial temperature elevation. US 1,562,805 is silent on controlled cooling of the mixture to crystallize potassium hydroxide. FR 714276 relates to the preparation of crystallized caustic potash corresponding to the formula KOH.1H₂O, comprising a first step of obtaining crystallized KOH.2H₂O by cooling of potash liquor. FR 714276 is silent on controlled controlling the cooling step.

The object of the present invention is to provide a facilitated method of purifying potassium hydroxide by means of crystallization whereby a high-purity potassium hydroxide dihydrate having a sodium content of less than 0.05 wt% based on the weight of the potassium hydroxide crystals can be obtained.

A further object of the present invention is to provide a facilitated method only requiring one crystallization stage, i.e. without any substantial need for recrystallizing already formed crystals to obtain sufficient purity.

A further object of the present invention is to provide a convenient method enabling a larger selection of suitable vessels in which crystallization is performed, particularly in view of the corrosive nature of potassium hydroxide, especially at elevated temperatures which, in the past, resulted in considerable corrosion of metal-based vessels employed. A further object is to provide a method which does not necessitate addition of any additional chemicals which may contaminate the purification method. Furthermore, use of non-metallic alternative materials such as plastics has heretofore been limited. A further object is to provide a method performed at room temperature or close to room temperature further facilitating the handling of the process and which saves energy compared to crystallization processes performed at elevated temperatures.

### The invention

The present invention relates to a method of preparing potassium hydroxide dihydrate, having a sodium content of less than 0.05 wt% based on the weight of the potassium hydroxide crystals, according to claim 1. The temperature change during cooling may be controlled by any conventional means. The crystals may be separated from the solution by means of filtration, such as vacuum filtration. A vacuum may be applied to the solution so as to cause evaporation thereof. This may be performed at a substantially constant temperature, e.g. at a temperature in a range from about 5 to about 35, or from about 15 to about 35, such as from about 20 to about 33, for example from about 20 to about 30, or from about 25 to about 30 °C.

Potassium hydroxide may be hydrated or dehydrated. Various forms of hydrates of potassium hydroxide exist including KOH_{*}H₂O, KOH*2(H₂O), KOH_{*}4(H₂O) and KOH_{*}5(H₂O), and others. Potassium hydroxide is commonly referred to as caustic potash or potash which may be produced e.g. by means of electrolysis of potassium chloride. The form of potassium hydroxide hydrate crystals may vary with temperature. For example, potassium hydroxide dihydrate may be predominant at non-elevated temperatures, especially below about 35 °C. A temperature below about 35 °C may then substantially result in potassium hydroxide dihydrate.

According to one embodiment, the solution is aqueous. It may besides water, also contain an organic solvent miscible in water such as an alcohol such as methanol, ethanol or glycerol; or mixtures thereof.

According to one embodiment, the solution of potassium hydroxide contains cationic and/or anionic impurities of e.g. sodium and/or chloride ions. The solution to be purified can have a sodium content from about 0.001 to about 5, for example from about 0.005 to about 2 or from about 0.02 to about 1, such as from about 0.2 to about 1 wt%. The solution can have a chloride content from about 0.0001 to about 0.5 such as from about 0.0003 to about 0.1 wt%. The solution may also contain impurities of iron and/or nickel, for example in an amount from about 0.1 to about 100 mg/l.

According to one embodiment, the cooling rate is from about 0.1 to about 4, for example from about 0.1 to about 2, or 0.1 to about 1 °C/h.

According to one embodiment, the potassium hydroxide crystals formed are rinsed, e.g. with water to remove impurities therefrom.

According to one embodiment, addition of an effective amount of crystals such as potassium hydroxide crystals, e.g. crystals of potassium hydroxide dihydrate, is made to induce crystal growth in the solution, for example prior to or during cooling. According to one embodiment, the solution is seeded by an effective amount of crystals such as KOH, for example in an amount from about 0.00001 to about 10 wt% based on the initial KOH amount in the solution. In any occasion in case the solution is seeded, it is important that the temperature is such that spontaneous uncontrolled nucleation has not started. The temperature at which the solution is saturated depends on the concentration of the potassium hydroxide and any addition of crystals is to be performed in a cautious way so as to prevent spontaneous nucleation. The solution may be stirred by means of stirring means, e.g. stirring blades, to maintain the solution of potassium hydroxide as homogeneous as possible. The method is performed until the potassium hydroxide crystals contain less than about 0.05, such as less than about 0.03, or less than about 0.001 wt% of sodium based on the weight of potassium hydroxide crystals. Such measurements may be performed by means of any conventional methods, for example by means of on-line or off-line measurements.

According to one embodiment, the temperature of the solution ranges from about 10 to about 33 or from about 15 to about 33, such as from about 20 to about 33, e.g. from about 20 to about 30 or from about 25 to about 30 °C. In this temperature ranges, potassium hydroxide crystallization is crystallized substantially in the form of KOH_{*}2(H₂O).

According to one embodiment, the crystals formed by the method as defined herein are recrystallized to further improve the purity thereof if necessary. Optionally, no ammonia is added in the method.

The invention being thus described, it will be obvious that the same may be varied in many ways. The following examples will further illustrate how the described invention may be performed without limiting the scope of it.

All parts and percentages refer to part and percent by weight, if not otherwise stated.

### Examples

In all samples except for trial E, a saturated potassium hydroxide solution (table 1) was prepared. Sample E was prepared by dissolving KOH _{∗} 2H₂O crystals obtained from earlier trials in water. The temperature of the KOH solution was lowered while stirring (sample B:150 rpm; C-N: 100 rpm) with a cooling rate of 0.1-1 °C/h in all samples except B (reference). All solutions except for B and L were subsequently seeded with a pinch of KOH crystals at low supersaturation.

When the desired final temperature was reached, the temperature was held constant. The crystals were separated from the mother liquor by means of filtration through a glass filter by vacuum suction. In several trials (cf. table 2), the crystals were rinsed with 1 or 3 ml of ice-cold water which rapidly were filtrated through the crystal bed.

**Table 1**

| *Sample ID* | *KOH-H₂0 crystals* | | | *KOH-H₂O solution* | | | *Sample compositions* | | |
|---|---|---|---|---|---|---|---|---|---|
| | KOH | K₂CO₃ | Na | KOH | K₂CO₃ | Na | 50 KOH | wt% | KOH pellets |
| | % | % | % | % | % | % | [g] | | [g] |
| B (ref) | 59.1 | 0.5 | 0.041 | 52.9 | 0.5 | 0.31 | 43.0 | | 5.0 |
| C | 60.3 | 0.5 | 0.012 | 53.1 | 0.5 | 0.31 | 43.0 | | 5.6 |
| E | 59.4 | 0.5 | 0.001 | 52.3 | 1.1 | 0.008 | - | | - |
| F | 59.5 | 0.5 | 0.001 | 52.8 | 0.5 | 0.41 | 45.0 | | 7.5 |
| G | 59.5 | 0.5 | 0.001 | 52.7 | 0.5 | 0.35 | 44.0 | | 6.0 |
| H | 59.6 | 0.5 | 0.015 | 52.7 | 0.5 | 0.36 | 44.0 | | 6.1 |
| I | 59.4 | 0.5 | 0.016 | 52.9 | 0.5 | 0.34 | 44.0 | | 6.1 |
| J | 58.2 | 0.5 | 0.019 | 52.9 | 0.5 | 0.41 | 44.0 | | 7.5 |
| K | 59.4. | 0.5 | 0.001 | 52.9 | 0.5 | 0.38 | 44.0 | | 5.4 |
| L | 59.7 | 0.5 | 0.004 | 54.1 | 0.5 | 0.38 | 42.0 | | 8.0 |
| M | 58.9 | 0.5 | 0.003 | 54.1 | 0.5 | 0.38 | 42.0 | | 8.0 |
| N | 59.9 | 0.5 | 0.001 | 52.7 | 0.5 | 0.35 | (44) | | (6.1) |

Table 1 shows the results from the crystallization trials. A higher carbonate content was measured in sample E prepared from KOH·2H₂O crystals and water (ultrapure). Solution N was seeded and crystallized at a temperature of 25°C. Thereafter, the solution was left to reach equilibrium at 25°C. The crystals were filtrated and the filtrated saturated solution was seeded again at 25°C.

**Table 2**

| *Sample ID* | *Na (crystals)* % | *Na (solution) %* | *K¹* | *Rinsing H₂O [ml]* | *Seeding* | *Crystal size ²* |
|---|---|---|---|---|---|---|
| B (ref) | 0.041 | 0.31 | 1.3E-01 | - | - | Small |
| L | 0.004 | 0.38 | 1.1E-02 | - | - | Medium |
| C | 0.012 | 0.31 | 3.9E-02 | - | B | Big |
| H | 0.015 | 0.36 | 4.2E-02 | - | C | Medium-Small |
| I | 0.016 | 0.34 | 4.7E-02 | - | C | Medium-Small |
| J | 0.019 | 0.41 | 4.6E-02 | 1 | C | Medium-Small |
| M | 0.003 | 0.38 | 7.9E-03 | 3 | C | Medium |
| K | 0.001 | 0.38 | 2.6E-03 | 1 | C | Medium- Big |
| E | 0.001 | 0.008 | 1.3E-01 | 1 | C | Big-Medium |
| F | 0.001 | 0.41 | 2.4E-03 | 1 | C | Big-Medium |
| G | 0.001 | 0.35 | 2.9E-03 | 1 | C | Big-Medium |
| N | 0.001 | 0.35 | 2.9E-03 | 1 | C | Big |

| | | | | | | |
|---|---|---|---|---|---|---|
| ¹Purity quotient: C_{Na (crystals)}/C_{Na} (solution) ²Small < 1 mm, Medium ≈ 1-2 mm, Big ≈ 2- 3mm | | | | | | |

Table 2 shows the obtained results in combination with information how the samples were seeded and rinsed, as well as the size of the filtered crystals. A higher sodium content is found in the samples which had not been rinsed with water after filtration. It can also be seen that the larger crystals in general has lower sodium content. The highest sodium content was found in sample B (reference) which had not been rinsed and in which spontaneous nucleation occurred at 20 °C. The temperature was then held constant at 20 °C whereafter the crystals were filtered from the mother liquor after 40 minutes. In sample L, on the contrary, a controlled nucleation process was initiated at 29 °C whereby the crystals grew as the temperature was lowered by 1 °C/h until it reached 25 °C. Also in sample I a rapid nucleation occurred at 24 °C. In sample C, cautious nucleation occurred after seeding at 23 °C. The crystals of sample J were relatively small due to the fact that seeding was made too early, i.e. at a low degree of saturation at a temperature of 29.8 °C.

## Claims

1. Method of preparing potassium hydroxide dihydrate having a sodium content of less than 0.05 wt% based on the weight of the potassium hydroxide crystals comprising
(a) providing a saturated potassium hydroxide solution having a temperature in the range from -25 to 33 °C.
(b) cooling said solution in such a way that the variation in temperature is in a range from 0.001 to 5 °C/h to form crystals of potassium hydroxide dihydrate
(c) separating potassium hydroxide dihydrate crystals from the solution.

2. Method according to claim 1 wherein the solution is an aqueous solution.

3. Method according to claim 1 or 2 wherein the solution of potassium hydroxide contains cationic and/or anionic impurities.

4. Method according to any one of claims 1 to 3 wherein the rate is from 0.1 to 4 °C/h.

5. Method according to any one of claims 1 to 4 wherein the rate is from 0.1 to 1 °C/h.

6. Method according to any one of claims 1 to 5 wherein the solution has a temperature from 10 to 33 °C.

7. Method according to any one of claims 1 to 6 wherein the solution has a temperature from 15 to 33 °C.

8. Method according to any one of claims 1 to 7 wherein the solution contains impurities of sodium in an amount from 0.001 to 5 wt%.

9. Method according to any one of claims 1 to 8 wherein the solution contains impurities of chloride in an amount from 0.0001 to 0.5 wt%.

10. Method according to any one of claims 1 to 9 wherein iron and/or nickel are present in the solution in an amount from 0.1 to 100 mg/l.

11. Method according to any one of claims 1 to 10 wherein the potassium hydroxide crystals formed are rinsed.

12. Method according to any one of claims 1 to 11 wherein addition of an effective amount of potassium hydroxide crystals to induce crystal growth in the solution is made.

13. Method according to any one of claims 1 to 12 wherein the crystals are recristallized.

## Patentansprüche

1. Verfahren zur Herstellung von Kaliumhydroxid-Dihydrat mit einem Natriumgehalt von weniger als 0,05 Gew.%, basierend auf dem Gewicht der Kaliumhydroxidkristalle, umfassend
(a) das Bereitstellen einer gesättigten Kaliumhydroxidlösung mit einer Temperatur in dem Bereich von -25 bis 33°C
(b) das Abkühlen der Lösung derart, dass der Temperaturunterschied in einem Bereich von 0,001 bis 5°C/h liegt, um Kristalle von Kaliumhydroxid-Dihydrat zu bilden
(c) das Abscheiden der Kaliumhydroxid-Dihydratkristalle aus der Lösung.

2. Verfahren nach Anspruch 1, wobei die Lösung eine wässrige Lösung ist.

3. Verfahren nach Anspruch 1 oder 2, wobei die Kaliumhydroxidlösung kationische und/oder anionische Verunreinigungen enthält.

4. Verfahren nach einem der Ansprüche 1 bis 3, wobei die Abkühlrate von 0,1 bis 4°C/h reicht.

5. Verfahren nach einem der Ansprüche 1 bis 4, wobei die Abkühlrate von 0,1 bis 1°C/h reicht.

6. Verfahren nach einem der Ansprüche 1 bis 5, wobei die Lösung eine Temperatur von 10 bis 33°C hat.

7. Verfahren nach einem der Ansprüche 1 bis 8, wobei die Lösung eine Temperatur von 15 bis 33°C hat.

8. Verfahren nach einem der Ansprüche 1 bis 7, wobei die Lösung Verunreinigungen von Natrium in einer Menge von 0,001 bis 5 Gew.% enthält.

9. Verfahren nach einem der Ansprüche 1 bis 8, wobei die Lösung Verunreinigungen von Chlorid in einer Menge von 0,0001 bis 0,5 Gew.% enthält.

10. Verfahren nach einem der Ansprüche 1 bis 9, wobei Eisen und/oder Nickel in der Lösung in einer Menge von 0,1 bis 100 mg/l vorhanden sind.

11. Verfahren nach einem der Ansprüche 1 bis 10, wobei die gebildeten Kaliumhydroxidkristalle gespült werden.

12. Verfahren nach einem der Ansprüche 1 bis 11, wobei die Zugabe einer wirksamen Menge von Kaliumhydroxidkristallen zur Herbeiführung von Kristallwachstum in der Lösung erfolgt.

13. Verfahren nach einem der Ansprüche 1 bis 12, wobei die Kristalle rekristallisiert werden.

## Revendications

1. Procédé de préparation d'hydroxyde de potassium dihydraté ayant une teneur en sodium inférieure à 0,05% en poids par rapport au poids des cristaux d'hydroxyde de potassium, comprenant le fait
(a) de fournir une solution saturée d'hydroxyde de potassium ayant une température dans la plage allant de -25 à 33°C,
(b) de refroidir ladite solution de sorte que la variation de température se situe dans une plage allant de 0,001 à 5°C/h pour former des cristaux d'hydroxyde de potassium dihydraté
(c) de séparer les cristaux d'hydroxyde de potassium dihydraté de la solution.

2. Procédé selon la revendication 1 dans lequel la solution est une solution aqueuse.

3. Procédé selon la revendication 1 ou 2, dans lequel la solution d'hydroxyde de potassium contient des impuretés cationiques et/ou anioniques.

4. Procédé selon l'une quelconque des revendications 1 à 3, dans lequel la vitesse est comprise entre 0,1 et 4°C/h.

5. Procédé selon l'une quelconque des revendications 1 à 4, dans lequel la vitesse est comprise entre 0,1 et 1°C/h.

6. Procédé selon l'une quelconque des revendications 1 à 5 dans lequel la solution a une température comprise entre 10 et 33°C.

7. Procédé selon l'une quelconque des revendications 1 à 6, dans lequel la solution a une température comprise entre 15 et 33°C.

8. Procédé selon l'une quelconque des revendications 1 à 7, dans lequel la solution contient des impuretés de sodium en une quantité comprise entre 0,001 et 5% en poids.

9. Procédé selon l'une quelconque des revendications 1 à 8, dans lequel la solution contient des impuretés de chlorure en une quantité comprise entre 0,0001 et 0,5% en poids.

10. Procédé selon l'une quelconque des revendications 1 à 9 dans lequel du fer et/ou du nickel sont présents dans la solution en une quantité comprise entre 0,1 et 100 mg/l.

11. Procédé selon l'une quelconque des revendications 1 à 10, dans lequel les cristaux d'hydroxyde de potassium formés sont rincés.

12. Procédé selon l'une quelconque des revendications 1 à 11, dans lequel l'ajout d'une quantité efficace de cristaux d'hydroxyde de potassium pour induire la croissance de cristaux dans la solution est effectué.

13. Procédé selon l'une quelconque des revendications 1 à 12, dans lequel les cristaux sont recristallisés.
